(19) **Europäisches Patentamt / European Patent Office / Office européen des brevets**

(11) **EP 2 037 262 B1**

(12) # EUROPÄISCHE PATENTSCHRIFT

(45) Veröffentlichungstag und Bekanntmachung des Hinweises auf die Patenterteilung:
**22.02.2017 Patentblatt 2017/08**

(51) Int Cl.:
*G01N 30/20* (2006.01)  *G01N 30/86* (2006.01)
*G01N 30/46* (2006.01)  *B01D 15/18* (2006.01)

(21) Anmeldenummer: **08008888.3**

(22) Anmeldetag: **17.10.2006**

(54) **Erzeugung von gepulsten Stoffgemischen**

Production of pulsed material mixtures

Production des mélanges pulsées de substances

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.10.2005 DE 102005050114**

(43) Veröffentlichungstag der Anmeldung:
**18.03.2009 Patentblatt 2009/12**

(62) Dokumentnummer(n) der früheren Anmeldung(en) nach Art. 76 EPÜ:
**06805440.2 / 1 994 403**

(73) Patentinhaber: **Studiengesellschaft Kohle mbH 45470 Mülheim an der Ruhr (DE)**

(72) Erfinder: **Trapp, Oliver 45470 Mühlheim an der Ruhr (DE)**

(56) Entgegenhaltungen:
**WO-A-01/51179  WO-A-02/39106 WO-A-03/067250**

EP 2 037 262 B1

**Beschreibung**

Die vorliegende Erfindung betrifft Verfahren und Vorrichtungen zur Erzeugung von gepulsten Stoffgemischen, insbesondere komplexen chemischen und/oder biochemischen Stoffgemischen, vorzugsweise zur Nutzung mit Verfahren zur Analyse von diesen Stoffgemischen, .

Bei diesen Verfahren wird ein zu analysierendes Stoffgemisch einer Trenneinrichtung zugeführt, durch chemisch und/oder physikalisch bewirkten Transport werden die Stoffe des zu analysierenden Stoffgemisches seitens der Trenneinrichtung voneinander getrennt und die voneinander getrennten Stoffe werden seitens einer Auswerteeinrichtung erfasst.

Im Stand der Technik sind verschiedene Verfahren und Vorrichtungen zur qualitativen und/oder quantitativen Analyse, also zur Bestimmung von Art und/oder Menge der Bestandteile eines Stoffgemisches bekannt, die chemische, physikalische und/oder biochemische Methoden und verschiedene Trenntechniken nutzen.

Zur Identifikation und/oder Quantifizierung von chemischen Verbindungen in komplexen chemischen und/oder biochemischen zu analysierenden Stoffgemischen, insbesondere bei der Analyse komplexer chemischer Stoffgemische aus Hochdurchsatzverfahren, insbesondere aus parallelisierten chemischen Reaktoren oder der Untersuchung kombinatorischer Substanzbibliotheken, und/oder bei der Analyse von natürlichen Stoffen, Proteinen, Peptiden und/oder dergleichen biochemisch relevanten, beispielsweise bei einer sogenannten Genom-, Proteom-, Metabolom-, und/oder Transskriptomanalyse zu analysierenden Verbindungen, kommen insbesondere chromatographische oder elektrophoretische Trennverfahren und/oder - einrichtungen zum Einsatz, wobei die zu analysierenden Stoffgemische sequentiell und/oder parallel analysiert werden.

Die Trenneinrichtungen sind zur Analyse ferner in der Regel mit einer Auswerteeinrichtung zur Erfassung beziehungsweise Detektion der voneinander getrennten Stoffe des Stoffgemischs gekoppelt beziehungsweise verbunden. Seitens der Auswerteeinrichtungen beziehungsweise Detektoren kommen dabei insbesondere spektroskopische und/oder spektrometrische Detektionstechniken zum Einsatz, im Zusammenhang mit Genom-, Proteom-, Metabolom-, und/oder Transskriptomanalysen insbesondere spektroskopische Detektoren, beispielsweise bei der Kernresonanzspektroskopie (NMR) oder der Infrarotspektroskopie (IR), und massenspektrometrische (MS) Detektoren zum Einsatz.

Die bisher bekannten Verfahren und Vorrichtungen zur Analyse von Stoffgemischen, insbesondere komplexen chemischen und/oder biochemischen Stoffgemischen, weisen verschiedene Nachteile auf. So sind die bisher bekannten, insbesondere hochauflösende spektroskopische und/oder spektrometrische Techniken nutzenden Verfahren und Vorrichtungen bedingt durch große Analysendauern sowie geringen Detektionsempfindlichkeiten beziehungsweise schlechten Signal-zu-Rausch-Verhältnissen (SNRs) der zum Einsatz kommenden Auswerteeinrichtungen limitiert. In der Regel ist dabei eine Analyse von sehr geringen Stoffmengen bei der Erfassung des gesamten spektroskopischen oder spektrometrischen Bereichs eines zu analysierenden Stoffgemischs nicht möglich. Darüber hinaus ist der Durchsatz an zu analysierenden Stoffgemischen insbesondere aufgrund der bisher erforderlichen großen Analysedauern stark eingeschränkt. So erfordert beispielsweise die qualitative und quantitative Analyse der Edukte und Produkte eines 7-mal-7-Parallelreaktors etwa 24,5 h bei einer Analysendauer von jeweils etwa 30 min. Beispielsweise sind im Stand der Technik aus der DE3001425 A1 eine Vorrichtung und ein Verfahren zur Probenaufgabe mit einer Kammer, einer Nadel zur Zuführung wenigstens eines Stoffgemisches, einem Glasmantel, einer Heizeinrichtung, einem Kanal für die Einführung eines Trägergases, einer Abzugsleitung und einer Gaschromatographensäule bekannt. Der vorliegenden Erfindung liegt in Anbetracht dieses Standes der Technik die Aufgabe zugrunde, die Analyse von Stoffgemischen unter Meidung der beschriebenen Nachteile zu verbessern, insbesondere hinsichtlich Analysendauer, Durchsatz und Auflösung.

Zur technischen Lösung des Analyseverfahrens wird mit der vorliegenden Erfindung ein Verfahren zur Erzeugung von gepulsten Stoffgemischen, insbesondere komplexen chemischen und/oder biochemischen Stoffgemischen bereitgestellt, wobei ein kontinuierlicher Stoffgemischstrom nacheinander durch wenigstens zwei voneinander getrennte Kammern geführt wird, wobei in der ersten Kammer eine Fokussierung des Stoffgemischstroms und in der zweiten Kammer eine Modulation des fokussierten Stoffgemischstroms mit Pulsen einer eindeutigen binären Sequenz erfolgt und dass die eindeutig binäre Sequenz aus einer mit einer wiederholenden Sequenz unterteilten mit einem binären Zufallsgenerator erzeugten Sequenz gebildet wird.

Dem Analyseverfahren liegt die Erkenntnis zugrunde, dass durch Nutzung eines zu analysierenden Stoffgemischs mit Pulsen einer eindeutigen binären Sequenz, also aus einer beliebigen Folge von Nullen ("0") und Einsen ("1") bestehenden Sequenz, ein mit einer Kennung, insbesondere nach Art eines Strichcodes, versehenes zu analysierende Stoffgemisch gegeben ist, so dass gleichzeitig unterschiedliche Stoffgemische - quasi nach Art eines Multiplexing-Verfahrens, ähnlich der US 2004/0144918 A1 für Anwendungen in der Spektroskopie (FT-NMR, FT-IR) und der Massenspektrometrie (FT-ICR-MS und HT-TOF-MS) - der Analyse zugeführt werden können, wodurch sich insbesondere die Analysendauer, der zu analysierende Stoffgemischdurchsatz und die Auflösung der analysierten Stoffe verbessern lassen. So sind vorteilhafterweise mehrere Stoffgemischanalysen durchführbar, wodurch insbesondere das Signal-zu-Rausch-Verhältnis (SNR) weiter verbessert wird.

Vorteilhafterweise werden die Pulse des zu analysierenden Stoffgemischs zeitlich und räumlich voneinander getrennt der Trenneinrichtung zugeführt.

In einer vorteilhaften Ausgestaltung des Analyseverfahrens wird die eindeutige binäre Sequenz mit einem binären Zufallsgenerator erzeugt. In einer weiteren vorteilhaften Ausgestaltung der Analyseverfahrens wird die eindeutige binäre Sequenz aus einer mit einer wiederholenden Sequenz unterteilten, mit einem binären Zufallsgenerator erzeugten Sequenz gebildet. Durch diese Maßnahmen wird so eine sogenannte Pseudozufallssequenz erzeugt und vorteilhafterweise sichergestellt, dass sich Sequenz der Pulse des zu analysierenden Stoffgemischs nicht wiederholt. Insgesamt wird so die Eindeutigkeit der binären Pulssequenz verbessert.

Gemäß einem weiteren vorteilhaften Vorschlag des Analyseverfahrens besteht die eindeutige binäre Sequenz aus $2^n$ Elementen, mit $0 \leq n \leq \infty$ (zumindest theoretisch), vorzugsweise mit $5 \leq n \leq 128$, besonders bevorzugt mit $7 \leq n \leq 14$. Das Analyseverfahren macht sich die Erkenntnis zunutze, dass n Analysen in derselben Zeit wie eine konventionelle Analyse durchgeführt werden können. Dies hat zur Folge, dass das Signal-zu-Rausch-Verhältnis (SNR) verbessert werden kann in einem Bereich von $\sqrt{\frac{n}{2}} \geq SNR \geq \frac{\sqrt{n}}{2}$. Die maximal erreichbare Verbesserung des Signal-zu-Rausch-Verhältnisses (SNRs) beträgt dementsprechend $\frac{\sqrt{n}}{2}$. Je länger die verwendeten Pulssequenzen sind, desto größer wird der Vorteil beim Signal-zu-Rausch-Verhältnis (SNR), der sogenannte Felgett-Vorteil, und dementsprechend verbessert die Auflösung und die Eindeutigkeit der Zuordnung der Signale der von der Auswerteeinheit erfassten Stoffe.

Eine weitere Ausgestaltung des Analyseverfahrens ist gekennzeichnet durch ein Modulationsintervall mit einer Sequenz- beziehungsweise Pulsintervalldauer ($\Delta t$) in einem Bereich von etwa 0,25 s bis etwa 120 s, vorzugsweise in einem Bereich von etwa 1 s bis etwa 20 s. Eine weitere vorteilhafte Ausgestaltung des Analyseverfahrens sieht eine Pulsdauer ($\Delta t_{Puls}$) in einem Bereich von etwa 1 ms bis etwa 1 s, vorzugsweise in einem Bereich von etwa 1 ms bis etwa 10 ms, vor. So sind hochpräzise gepulste Sequenzen des zu analysierenden Stoffgemischs erzeugbar, die insbesondere zu einer weiteren Verbesserung des Durchsatzes und der Auflösung führen.

Vorteilhafterweise erfolgt die Stofferfassung der Auswerteeinrichtung synchronisiert mit der Stoffgemischzuführung. In einer bevorzugten Ausgestaltung des Analyseverfahrens wird die Auswerteeinrichtung mit einer Erfassungsdauer betrieben, die der Pulsintervalldauer ($\Delta t$) oder einem ganzzahligen Bruchteil der Pulsintervalldauer ($\Delta t$) entspricht. Dadurch ist vorteilhafterweise ein sogenanntes Oversampling der Pulssequenz realisierbar. So können vorteilhafterweise seitens der Auswerteeinrichtung zur Erfassung der Stoffe des zu analysierenden Stoffgemisches Detektoren eingesetzt werden, die im Vergleich zu der Pulsintervalldauer ($\Delta t$) mit geringeren Erfassungszeiten, das heißt insbesondere langsamer, betrieben werden. So ist vorteilhafterweise eine Erfassung von Stoffen des zu analysierenden Stoffgemisches im gesamten Detektionsbereich des Detektors der Auswerteeinrichtung ermöglicht.

Eine besonders vorteilhafte Ausgestaltung des Analyseverfahrens sieht vor, dass die seitens der Auswerteeinrichtung erfassten Stoffe mit der eindeutigen binären Sequenz der Pulse des zu analysierenden Stoffgemischs mathematisch dekonvoliert werden, vorzugsweise durch eine zweidimensionale mathematische Dekonvolution. Vorteilhafterweise werden im Rahmen der Dekonvolution die von der Auswerteeinrichtung erfassten Stoffe einer Hadamard-Transformation mit der eindeutigen binären Sequenz unterzogen werden, aus dem Ergebnis der Hadamard-Transformation die Konzentrationsverteilungen der von der Auswerteeinrichtung erfassten Stoffe bestimmt werden und die Konzentrationen der einzelnen von der Auswerteeinrichtung erfassten Stoffe bestimmt werden, vorzugsweise durch Lösung eines von den Konzentrationsverteilungen, den Konzentrationen der einzelnen von der Auswerteeinrichtung erfassten Stoffe und der von der Auswerteeinrichtung erfassten Stoffe gebildeten linearen Gleichungssystems nach den Konzentrationen der einzelnen von der Auswerteeinrichtung erfassten Stoffe. Durch eine zweidimensionale mathematische Dekonvolution mit der bekannten Pulssequenz des zu analysierenden Stoffgemischs sind so vorteilhafterweise die jeweiligen Spektren der Stoffe des Stoffgemischs in Abhängigkeit ihrer jeweiligen Retentionszeit zur Identifikation und Quantifizierung bestimmbar, wobei vorteilhafterweise gegenüber bisher bekannten, insbesondere kontinuierlich betriebenen Analyseverfahren ein verbessertes Signal-zu-Rausch-Verhältnis (SNR) und eine verbessere Nachweisgrenze erzielt wird.

Die Hadamard-Transformation (HT) ermöglicht vorteilhafterweise ein Multiplexing des zu analysierenden Stoffgemisches mit der vorteilhafterweise bis zu drei diskrete Zustände ("-1", "0" "+1") kodiert werden können. Das zu analysierende Stoffgemisch wird dabei als Wellen- oder Teilchenpaket mit der binären Pseudozufallssequenzen (Modulationssequenz) kodiert. Anstelle der Hadamard-Matrix kann vorteilhafterweise eine daraus abgeleitete Simplex-Matrix verwendet werden, die lediglich zwei diskrete Zustände ("0", "1") kodiert und durch einfache Umformung aus der Hadamard-Matrix wie folgt erhalten werden kann:

Streichen der
1. Zeile und 1. Reihe

Modulationssequenz

$$H := \begin{bmatrix} 1 & 1 & 1 & 1 & 1 & 1 & 1 \\ -1 & -1 & -1 & 1 & -1 & 1 & 1 \\ -1 & -1 & 1 & -1 & 1 & 1 & -1 \\ -1 & 1 & -1 & 1 & 1 & -1 & -1 \\ 1 & -1 & 1 & 1 & -1 & -1 & -1 \\ -1 & 1 & 1 & -1 & -1 & -1 & 1 \\ 1 & 1 & -1 & -1 & -1 & 1 & -1 \\ 1 & -1 & -1 & -1 & 1 & -1 & 1 \end{bmatrix}$$

Austausch
−1 zu 1
1 zu 0

$$S := \begin{bmatrix} 1 & 1 & 1 & 0 & 1 & 0 & 0 \\ 1 & 1 & 0 & 1 & 0 & 0 & 1 \\ 1 & 0 & 1 & 0 & 0 & 1 & 1 \\ 0 & 1 & 0 & 0 & 1 & 1 & 1 \\ 1 & 0 & 0 & 1 & 1 & 1 & 0 \\ 0 & 0 & 1 & 1 & 1 & 0 & 1 \\ 0 & 1 & 1 & 1 & 0 & 1 & 0 \end{bmatrix}$$

Simplex Matrix

Die mathematische Dekonvolution erfolgt vorteilhafterweise durch Multiplikation des erhaltenen Signals mit der inversen Hadamard-Matrix beziehungsweise Simplex-Matrix:

$$I_{Rohdaten} \times S^{-1} = I_{Daten}$$

Vorteilhafterweise nutzt die Trenneinrichtung chromatographische und/oder elektrophoretische Trennverfahren und ist vorzugsweise ein Gaschromatograph oder ein überkritischer Flüssigchromatograph.

In einer weiteren vorteilhaften Ausgestaltung umfasst die Auswerteeinrichtung wenigsten einen Detektor und/oder wenigstens einen spektroskopischen und/oder spektrometrischen Detektor.

Zur Erzeugung von gepulsten Stoffgemischen, insbesondere komplexen chemischen und/oder biochemischen Stoffgemischen, wird erfindungsgemäß vorgeschlagen, , dass ein kontinuierlicher Stoffgemischstrom nacheinander durch wenigstens zwei voneinander getrennte Kammern geführt wird, wobei in der ersten Kammer eine Fokussierung des Stoffgemischstroms und in der zweiten Kammer eine Modulation des fokussierten Stoffgemischstroms mit Pulsen einer eindeutigen binären Sequenz erfolgt.

Vorteilhafterweise erfolgt die Fokussierung des Stoffgemischstroms und/oder die Modulation des fokussierten Stoffgemischstroms mittels eines Kalt- und Warmgasstroms, wobei der Stoffgemischstrom zunächst ausgefroren und anschließend durch schnelles Aufheizen wieder freigesetzt wird.

In einer weiteren Ausgestaltung der Erfindung weisen die Kammern jeweils wenigstens eine Kaltgasjetdüse und wenigstens eine Warmgasjetdüse auf, deren Düsenöffnungen eine im Wesentlichen senkrecht zur Strömungsrichtung des Stoffgemischstroms durch die jeweilige Kammer Kalt-, beziehungsweise Warmgasströmung ermöglichen. Vorteilhafterweise ermöglichen die Düsenöffnungen der wenigstens einen Kaltgasjetdüse und der wenigstens einen Warmgasjetdüse der jeweiligen Kammern eine im Wesentlichen senkrecht zueinander stehende Strömung. Die Kalt- und/oder Warmgasjetdüsen der jeweiligen Kammern werden vorteilhafterweise mit Gasströmen von bis zu 40 l/min betrieben.

Eine weitere Ausgestaltung der Erfindung sieht vor, dass zumindest die Düsen der eine Modulation des fokussierten Stoffgemischstroms ermöglichenden Kammer mit Schaltzeiten in einem Bereich von etwa 1 ms bis etwa 1 s, vorzugsweise in einem Bereich von etwa 1 ms bis etwa 10 ms, angesteuert werden.

Vorteilhafterweise werden die Düsen der wenigstens zwei Kammern getrennt und unabhängig voneinander angesteuert. In einer weiteren Ausgestaltung der Erfindung werden die Düsen der wenigstens zwei Kammern synchronisiert angesteuert, vorzugsweise mit unterschiedlichen Sequenzen angesteuert werden.

Eine weitere Ausgestaltung der Erfindung sieht eine Veränderungen der Zusammensetzung des verdampften Stoffgemisches ausschließende Gasströmung eines Gases und/oder eines Gasgemisches für den Kalt- und/oder Warmgasstroms vor, besonders bevorzugt realisiert durch Nutzung eines inerten Gases und/oder inerten Gasgemisches. Vorteilhafterweise wird der Druck der jeweiligen Gasströmung gesteuert.

Zur Erzeugung von gepulsten Stoffgemischen, insbesondere komplexen chemischen und/oder biochemischen Stoffgemischen, wird ferner eine Vorrichtung vorgeschlagen, die gekennzeichnet ist, durch wenigstens zwei voneinander getrennte, jeweils einen Eingang und einen Ausgang aufweisende Kammern zur Führung eines kontinuierlichen Stoffgemischstroms durch die jeweilige Kammer, wobei die Kammern in Strömungsrichtung des Stoffgemischstroms durch die Kammern nacheinander angeordnet sind und wobei die Kammern jeweils wenigstens eine Kaltgasjetdüse und wenigstens eine Warmgasjetdüse aufweisen, deren Düsenöffnungen eine im Wesentlichen senkrecht zur Strömungsrichtung des Stoffgemischstroms durch die jeweilige Kammer ermöglichende Kalt-, beziehungsweise Warmgasströmung ermöglichen.

In einer weiteren Ausgestaltung der Erfindung sind die Düsenöffnungen der wenigstens einen Kaltgasjetdüse und der wenigstens einen Warmgasjetdüse der jeweiligen Kammern ausgebildet, eine im Wesentlichen senkrecht zueinander stehende Strömung zu ermöglichen.

Vorteilhafterweise sind die Kalt- und/oder Warmgasjetdüsen der jeweiligen Kammern mit Gasströmen von bis zu 40 l/min betreibbar.

In einer weiteren vorteilhaften Ausgestaltung der Erfindung ist die in Strömungsrichtung des Stoffgemischstroms erste Kammer ausgebildet eine Fokussierung des Stoffgemischstroms zu ermöglichen und ist die in Strömungsrichtung des Stoffgemischstroms zweite Kammer ausgebildet eine Modulation des fokussierten Stoffgemischstroms mit Pulsen einer eindeutigen binären Sequenz zu ermöglichen.

Vorteilhafterweise sind zumindest die Düsen der eine Modulation des fokussierten Stoffgemischstroms ermöglichenden Kammer mit Schaltzeiten in einem Bereich von etwa 1 ms bis etwa 1 s, vorzugsweise in einem Bereich von etwa 1 ms bis etwa 10 ms, ansteuerbar.

Vorteilhafterweise werden das weitere erfindungsgemäße Verfahren und die weitere erfindungsgemäße Vorrichtung zur Erzeugung von gepulsten Stoffgemischen, insbesondere komplexen chemischen und/oder biochemischen Stoffgemischen, mit einem erfindungsgemäßen Analyseverfahren genutzt, wobei das zu analysierende Stoffgemisch über den Ausgang der zweiten Kammer der Trenneinrichtung zugeführt wird beziehungsweise zuführbar ist.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:

Fig.1:  in einer schematischen Prinzipdarstellung ein Ausführungsbeispiel für den prinzipiellen Aufbau einer Anordnung zur Durchführung der Analyse von Stoffgemischen;

Fig. 2:  in einer schematischen Prinzipdarstellung ein weiteres Ausführungsbeispiel für den prinzipiellen Aufbau einer Anordnung zur Durchführung der Analyse von Stoffgemischen;

Fig. 3:  in einer schematischen Darstellung den Aufbau eines Ausführungsbeispiels einer erfindungsgemäßen Vorrichtung zur Erzeugung von gepulsten Stoffgemischen;

Fig. 4:  in einem Diagramm eine gemessene Injektionsstabilität einer eindeutigen binären Sequenz eines gepulsten Stoffgemisches mit 127 Pulsen;

Fig. 5:  einen vergrößerten Ausschnitt des Diagramms nach Fig. 4

Fig. 6:  in einem Diagramm eine gemessene Injektionsstabilität einer eindeutigen binären Sequenz eines gepulsten Stoffgemisches mit 2048 Pulsen;

Fig.7:  in einer schematischen Darstellung Injektionsabschnitte zu analysierender Stoffgemische innerhalb einer eindeutigen binären Sequenz;

Fig.8:  in einem Diagramm die erfasste Konzentrationsänderung eines zu analysierenden Stoffgemischs;

Fig. 9:  in einer schematischen Darstellung den Ablauf der Analyse und

Fig. 10:  in einer weiteren schematischen Darstellung den Ablauf der Analyse.

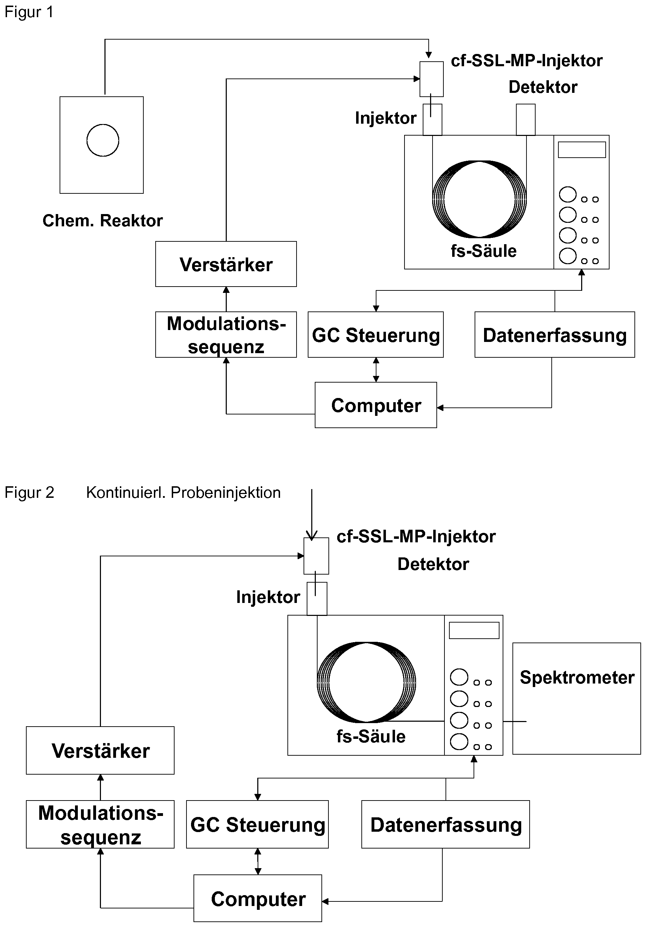

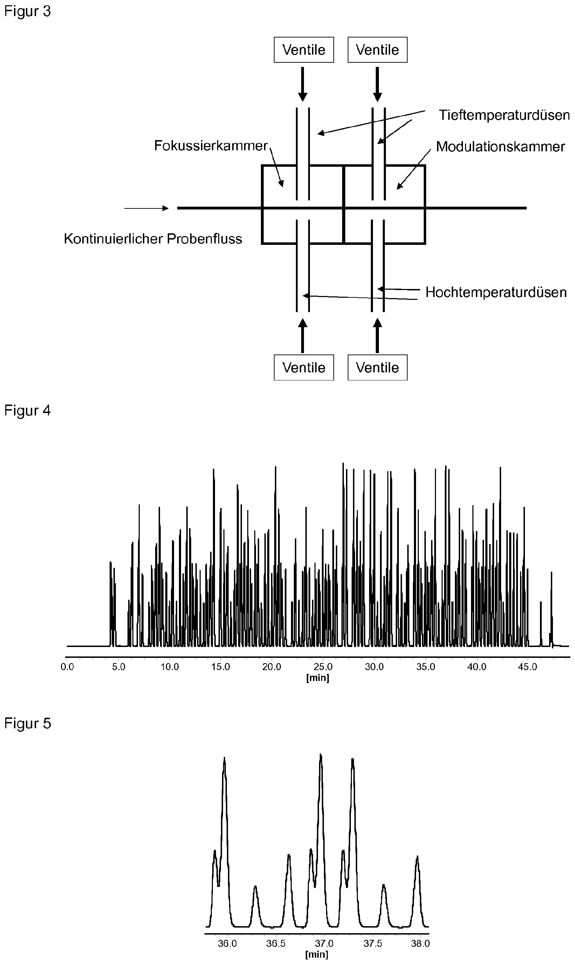

Fig. 1 und Fig. 2 zeigen jeweils in einer schematischen Prinzipdarstellung ein Ausführungsbeispiel für den prinzipiellen Aufbau einer Anordnung zur Durchführung der Analyse von Stoffgemischen, insbesondere komplexen chemischen und/oder biochemischen Stoffgemischen. Dabei wird ein von einem chemischen Reaktor kommendes, zu analysierendes Stoffgemisch als kontinuierlicher Strom einer Vorrichtung (Injektor) zur Erzeugung von gepulsten Stoffgemischen zugeführt. Ausführungsbeispiele entsprechender Vorrichtungen zur Erzeugung von gepulsten Stoffgemischen sind in Fig. 3 bis Fig. 7 dargestellt und werden nachfolgend im Zusammenhang mit diesen näher erläutert. Der kontinuierliche Stoffgemischstrom des zu analysierenden Stoffgemischs wir bei dem Ausführungsbeispiel gemäß Fig. 1 von einem chemischen Reaktor geliefert. Die von der Vorrichtung zur Erzeugung von gepulsten Stoffgemischen erzeugten Stoffgemischpulse werden dann auf die Trennsäule (fused-silica-Säule (fs-Säule)) eines als Trenneinrichtung dienenden Gaschromatographen (GC) gegeben. Seitens des Gaschromatographen (GC) werden die die Stoffe des zu analysierenden Stoffgemisches voneinander getrennt. Die voneinander getrennten Stoffe werden dann seitens einer Auswerteeinrichtung erfasst. Die Auswerteeinrichtung ist bei dem in Fig. 1 dargestellten Ausführungsbeispiel durch einen Detektor des Gaschromatographen ausgebildet. Bei dem in Fig. 2 dargestellten Ausführungsbeispiel ist die Auswerteeinrichtung ein mit dem Gaschromatographen (GC) gekoppeltes Spektrometer. Die Komponenten der Anordnung, das heißt eine Steuereinrichtung (GC-Steuerung) des Gaschromatographen (GC), eine Datenerfassungseinrichtung und eine von der Vorrichtung (Injektor) zur Erzeugung von Stoffgemischpulsen als Modulator genutzte, mit einem Verstärker verbundene Einrichtung (Modulationssequenz) zur Erzeugung einer eindeutigen binären Sequenz der Stoffgemischpulse, werden vorliegend von einer mit den Komponenten verbundenen Recheneinrichtung (Computer) gesteuert.

Zur Durchführung der Analyse von Stoffgemischen mittels Multiplexing ist eine präzise Kontrolle der Injektion des Stoffgemisches (Analyten) in das chromatographische Trennsystem erforderlich. Diese Kontrolle umfasst insbesondere eine präzise und definierte zeitliche Kontrolle des Zeitintervall zwischen aufeinanderfolgenden Injektionen des gepulsten Stoffgemisches in die Trenneinrichtung (Gaschromatographen) sowie der Injektionsdauer innerhalb eines solchen Zeitintervalls. Ferner ist eine präzise und definierte Kontrolle der Quantität des Stoffgemisches (Probenquantität) erforderlich.

Die bisher im Stand der Technik zur Erzeugung von gepulsten Stoffgemischen beispielsweise im Bereich der Gas- und Flüssigchromatographie oder der Kapillarelektrophorese zum Einsatz kommenden Ventilschaltungen sind langsam und die Steuerung des Probenvolumens ist insbesondere durch Probenschleifen unflexibel. Ferner treten durch eine direkt mit dem chromatographischen System gekoppelt Ventilschaltung Druckstöße auf, die zu sogenannten Systempeaks im Chromatogramm führen, da kein kontinuierlicher Fluss im chromatographischen System auftritt.

Die in Fig. 1 und Fig. 2 genutzte Vorrichtung (Injektor cf-SSL-MP-Injektor) zur Erzeugung von gepulsten Stoffgemischen ist vorzugsweise für die Gaschromatographie (GC) (vgl. Fig. 1 und Fig. 2) durch einfache Montage auf einen vorhanden split/splitless Injektor des Gaschromatographen anschließbar. Eine entsprechende Anwendung durch einfachen Anschluss ist vorteilhafterweise auch für eine hier nicht explizit dargestellte überkritische Flüssigchromatographie (SFC) gegeben.

Fig. 3 zeigt ein erfindungsgemäßes Ausführungsbeispiel einer Vorrichtung zur Erzeugung von gepulsten Stoffgemischen. Dabei wird der kontinuierliche Strom eines zu analysierenden Stoffgemisches direkt auf der Trennsäule einer Trenneinrichtung, vorliegend, wie in Fig. 1 und Fig. 2 dargestellt des Gaschromatographen, durch einen doppelfokussierenden Tieftemperaturmodulator moduliert. Der in Fig. 3 im prinzipiellen Aufbau dargestellte erlaubt dabei insbesondere eine für zweidimensionale Trenntechniken einsetzbare Kodierung des zu analysierenden Stoffgemisches. Wie anhand von Fig. 3 erkennbar, verfügt der Säulentieftemperaturmodulator über zwei getrennte Modulationskammern. Die erste Kammer erreicht die Fokussierung des zu analysierenden Stoffgemischs (Analyten), in der zweiten Kammer erfolgt die Modulation des zu analysierenden Stoffgemischs (Analyten) gemäß einer binären Pseudozufallssequenz, welche von der in Fig. 1 und Fig. 2 dargestellten Recheneinrichtung (Computer) und/oder einer separaten Einrichtung zur Erzeugung einer entsprechenden Modulationssequenz erzeugt wird. Mittels Kaltluft- und Warmluftjetdüsen mit einem Volumenstrom von bis zu 40 1/min wird das zu analysierende Stoffgemisch (Analyten) auf der Säule zunächst mittels Kaltluft ausgefroren, dann durch schnelles Aufheizen mittels Warmluft wieder freigesetzt. Die Jetdüsen der Vorrichtung (Säulentieftemperaturmodulator) werden dabei getrennt und unabhängig voneinander angesteuert. Dabei sind die beiden Kammern zwar synchronisiert, werden aber mit unterschiedlichen Sequenzen angesteuert. Die Steuerung erfolgt vorteilhafterweise so, dass kein "Auseinanderlaufen" der Analyten auf der Säule erfolgen kann.

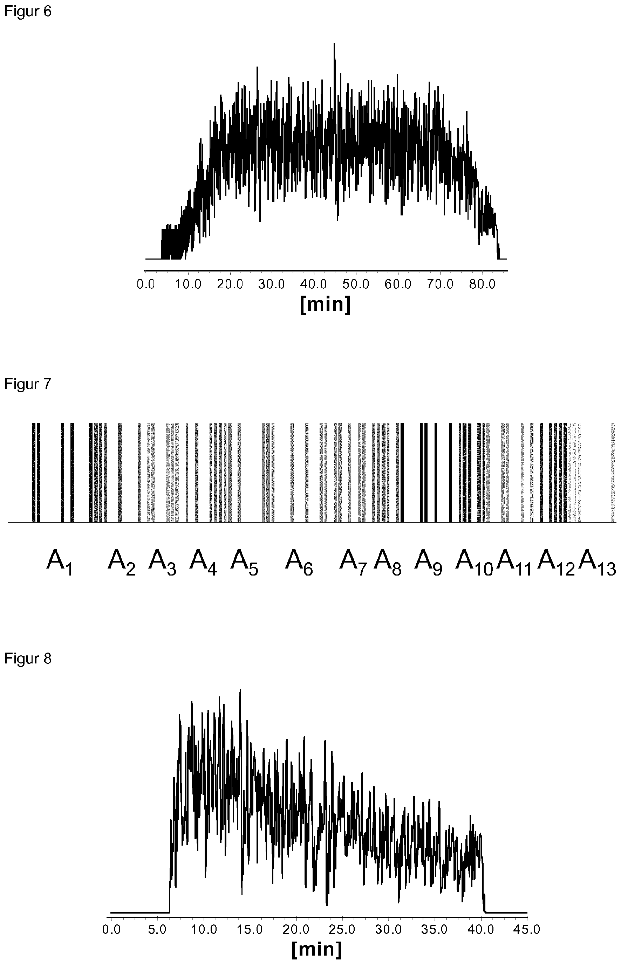

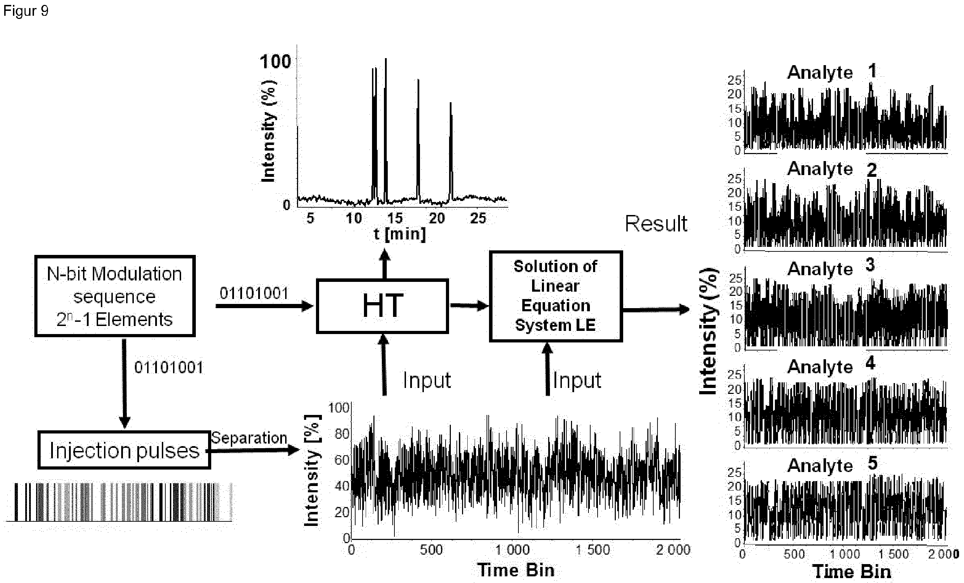

Fig. 4 und Fig. 6 zeigen jeweils ein Diagramm einer gemessenen Injektionsstabilität einer eindeutigen binären Sequenz eines gepulsten Stoffgemisches über der Zeit. Fig. 4 zeigt dabei die Injektionsstabilität über eine Zeitdauer von 50 min einer 7-bit Sequenz (entsprechend $2^7$=127 Elementen) mit einem Injektionsintervall von $\Delta t = 20$ s, einer Pulsdauer von $\Delta t_{Puls} = 10$ ms, bei einer 10 Hz Datenakquisition. Fig. 5 zeigt einen vergrößerten Ausschnitt des Diagramms nach Fig. 4. Anhand von Fig. 5 ist deutlich die Stabilität der Peakflächen von drei unterschiedlichen Stoffgemischen (Analyten) erkennbar. Fig. 9 zeigt die Injektionsstabilität bei kurzen Injektionsintervallen mit 1023 Injektionen in 34 min einer 11-bit Sequenz (entsprechend $2^{11}$=2048 Elementen) mit einem Injektionsintervall von $\Delta t = 1$ s, einer Pulsdauer von $\Delta t_{Puls} = 2$ ms, bei einer 10 Hz Datenakquisition.

Wie anhand der Figuren 4 bis 6 erkennbar erreichen ist mit den in den Fig. 1 bis 3 dargestellten Anordnungen eine außerordentlich gute Injektionsstabilität auch bei kurzen Injektionsintervallen, insbesondere Injektionsintervallen kleiner 400 ms, erzielbar. Dabei kann die Pulsdauer bei gleichbleibender Stabilität auch über das gesamte Injektionsintervall beibehalten werden ($\Delta t = \Delta t_{Puls}$).

Da die Pulsdauer gegenüber dem Injektionsintervall kurz gewählt werden kann, ist vorteilhafterweise eine Mehrfachinjektion innerhalb eines Injektionsintervalls möglich (Oversampling), wodurch der Durchsatz zu analysierender Stoffgemische (Probendurchsatz) weiter steigerbar ist.

Die Kodierung der Analytproben erfolgt durch Injektion der Analyte gemäß einer binären Pseudozufallssequenz oder einer Zufallssequenz, die aus einer mit einer wiederholenden Sequenz unterteilten Pseudozufallssequenz besteht, die $2^n$-x Elemente aufweist (im Falle von Simplex- und Hadamardmatrizen ist x = 1). Dabei können die jeweiligen Injektionsabschnitte für die jeweiligen Analytproben unterschiedlich lang sein, um eine äquivalenten Informationsinhalt zu gewährleisten. Fig. 7 zeigt in einer schematischen Darstellung entsprechende Injektionsabschnitte für Proben A1 bis A13 innerhalb einer binären Pseudozufallssequenz. Die Injektionssequenz besteht aus der gleichen Anzahl der Elemente 0 und 1 bzw. die Anzahl kann um 1 differieren ($2^n$-1).

Die in Fig. 7 exemplarisch dargestellten Injektionsabschnitte der Proben A1 bis A13 können zudem in Kalibrier- und Messbereiche aufgeteilt werden, um eine kontinuierliche Quantifizierung mit innerer Standardisierung zu ermöglichen. Ein Element 1 in der binären Pseudozufallssequenz stellt dabei eine Injektion in Form eines einen Injektionsstoßes dar. Bei ein Elementen 0 findet keine Injektion statt. Die jeweiligen Elemente können zudem noch aufgeteilt werden in Untermodulationssequenzen, die für alle Elemente gleich aufgebaut sind, vorteilhafterweise um Mehrfachinjektionen (Oversampling) zu ermöglichen beziehungsweise zu gewährleisten.

Jedes zu analysierende Stoffgemisch (Probe) wird während der Analyse vorteilhafterweise mehrfach hintereinander injiziert, um eine Quantifizierung der jeweiligen Komponenten zu ermöglichen. Die minimale Anzahl benötigter Injektionen zur eindeutigen Identifizierung und Quantifizierung der einzelnen Analyte in einer Mischung ist dabei mit den folgenden charakteristische Größen bestimmbar:

Anzahl der Proben: $i_{max}$
Anzahl der Analyte in einer Probe: $k_{max}$

Anzahl der Zeitintervalle $\Delta t$ [s] aus der Modulationssequenz der Länge n: $N = 2^n - 1$
Datenakquisitionsfrequenz und oder Injektionsfrequenz (Oversampling) pro Zeitintervall: $f_{OVR}$
Maximale Retentionszeit: $t^{max}_R$ [min]
Maximale Anzahl analysierbarer Proben:

$$i_{\max} = \frac{\left( N + \dfrac{t_R^{\max}}{60\Delta t} \right)}{k_{\max}} f_{OVR}$$

Anzahl notwendiger Wiederholungsinjektionen pro Probe:

$$n_{Injektionen} = \frac{N}{2 \cdot i_{\max}} = \frac{N \cdot k_{\max}}{2\left( N + \dfrac{t_R^{\max}}{60\Delta t} \right) f_{OVR}}$$

Gesamtanalysendauer:

$$t_{Analysendauer} = \frac{\dfrac{N \cdot \Delta t}{60} + t_R^{\max}}{i_{\max}}$$

Probendurchsatz:

$$P = \frac{i_{\max}}{t_{Analysendauer}} = \frac{i_{\max}^2}{\left( \dfrac{N \cdot \Delta t}{60} + t_R^{\max} \right)} = \frac{\left( N + \dfrac{t_R^{\max}}{60\Delta t} \right) \cdot i_{\max}}{k_{\max}\left( \dfrac{N \cdot \Delta t}{60} + t_R^{\max} \right)}$$

Mit der in Fig. 7 dargestellten Vorrichtung zur Erzeugung von gepulsten Stoffgemischen (Tieftemperaturmodulation) ist insbesondere im Zusammenhang mit der in Fig. 2 dargestellten Anordnung zur Analyse von Stoffgemischen eine hochauflösende Analyse realisierbar. Dabei wird ein zu analysierendes Stoffgemisch (Analytprobe) mit einer eindeutigen binären Sequenz kodiert. Die Kodierung der Analytprobe erfolgt durch Tieftemperaturmodulation (Vorrichtung gemäß Fig. 3) der Analytprobe gemäß einer binären Pseudozufallssequenz oder einer Zufallssequenz, die aus einer mit einer wiederholenden Sequenz unterteilten Pseudozufallssequenz besteht, die $2^n$-x Elemente aufweist (im Falle von Simplex- und Hadamardmatrizen ist x = 1). Die Injektionssequenz besteht aus der gleichen Anzahl der Elemente 0 und 1 beziehungsweise die Anzahl kann um 1 differieren ($2^n$-1). Im Falle eines Elements 1 wird eine Probe injiziert beziehungsweise durch den Heißluftjet freigesetzt. Im Falle eines Elements 0 erfolgt keine Injektion beziehungsweise ein Einfrieren durch den Kaltluftjet. Die Injektionsintervalle werden entsprechend der benötigten Zeit für einen sogenannten Vollscan oder eines Vielfachen der Dauer eines sogenannten Vollscans des Spektrometers gewählt. Der Scan (Erfassung) des Spektrometers und das Injektionsintervall werden dabei miteinander synchronisiert. Die Injektionspulsdauer beziehungsweise Modulationsdauer beim Tieftemperaturmodulator kann gleich oder kürzer als das Injektionsintervall beziehungsweise das Modulationsintervall gewählt werden. In jedem Injektionsintervall beziehungsweise Modulationsintervall können vorteilhafterweise auch mehrere unterschiedliche spektroskopische oder spektrometrische Experimente durchgeführt werden. Vorzugsweise erfolgt ein Massenvollscan und MS/MS bzw. $MS^n$-Experimente zur eindeutigen Identifizierung und Quantifizierung.

Fig. 8 zeigt in einem Diagramm die zeitliche graduelle Konzentrationsänderung eines zu analysierenden Stoffgemischs (Analyten) als von der Auswerteeinrichtung erfasstes Gesamtchromatogramm. Die entsprechenden Daten des Gesamtchromatogramms liegen seitens der Auswerteeinrichtung und/oder seitens einer mit dieser verbundenen Datenerfassungseinrichtung (vgl. Fig. 1 und Fig. 2) vor. Die Rohdaten werden für die weitere Auswertung mittels seitens einer Recheneinrchtung (Computer) der Auswerteeinrichtung insbesondere im Rahmen einer Dekonvolution zur weiteren Auswertung genutzt.

Der Ablauf der Analyse eines Stoffgemischs ist in Fig.9 symbolisch dargestellt. Die Auswertung der Analyse erfolgt unter Nutzung eines Dekonvolutionsverfahrens. Das Dekonvolutionsverfahren weist die folgenden drei Schritte auf:

1. Dekonvolution der Rohdaten mit der inversen Kodiermatrix, um das Gesamtchromatogramm zu erhalten;
2. Berechnung der relativen Konzentrationsverteilung der einzelnen Analyten aus Schritt 1 und Füllen der Konzentrationsverteilungsmatrix sowie des Konzentrationsvektors der einzelnen Analyten und
3. Lösung des linearen Gleichungssystem zur Ermittlung der Konzentrationen der einzelnen Analyte.

Durch die Modulation von n Analytinjektionen wird ein Gesamtchromatogramm (vgl. Fig. 8 und Fig. 9) erhalten, das eine Überlagerung von n Einzelchromatogrammen darstellt. Die direkte Multiplikation der Rohdaten in der zirkulären Darstellung (nach $2^n$-1 Zeitintervallen wird die Signalintensität zu den Vektorelementen am Anfang wieder hinzuaddiert) mit der inversen Hadamard-, Simplex- oder inversen Matrix der bekannten binären Pseudozufallssequenz ergibt das Gesamtchromatogramm (vgl. Fig. 9) der jeweiligen Analyten.

Aus dem Gesamtchromatogramm ergibt sich zum einen die Zahl kmax der unterschiedlichen Analyten in den jeweiligen Proben i und die jeweiligen Peakformen. Dabei wird mit den Ausgestaltungen des Analyseverfahrens eine sehr gute Auflösung der Peaks erzielt, so dass sich das Verfahren auch auf Fragestellungen mit kleinen Trennfaktoren, wie die beispielsweise bei Enantiomerentrennungen zur Bestimmung des Enantiomerenüberschusses ee auftreten, anwenden lässt.

Da die Hadamardtransformation keine Analytschwankungen berücksichtigen kann, ist dieses Gesamtchromatogramm (vgl. Fig. 8) durch Abweichungen in der Basislinie charakterisiert, die allerdings wiederum eine Konvolution der jeweiligen Analytkonzentrationen darstellt. Daher wird zunächst wird eine Peakformanalyse durchgeführt, um die Verteilungsfunktion $\psi(A_k)$ der jeweiligen Analyte in Abhängigkeit der Zeit zu erhalten. Dabei wird das Maximum jedes einzelnen Analytpeaks auf 1 normiert. Damit wird anschließend die Konzentrationsverteilungsmatrix gefüllt und zwar in der Art und Weise, dass in jeder Spalte die Relativkonzentration $\psi(A_{i,j,k})$ des Analyten $A_k$ der i-ten Probe und j-ten Wiederholungsinjektion in Abhängigkeit der Injektionssequenz und des Zeitintervalls $\Delta t$ wie folgt steht:

$$Chromatogramm = ij \sum_{k=1}^{k_{max}} \Psi(A_k)$$

$$= \begin{bmatrix} \Psi(A_1(1)) & \Psi(A_2(1)) & \Psi(A_3(1)) & \cdot & & \cdot & & \cdot & & \Psi(A_k(1)) \\ \Psi(A_1(2)) & \Psi(A_2(2)) & \Psi(A_3(2)) & & & & & & & \cdot \\ \Psi(A_1(3)) & \Psi(A_2(3)) & \Psi(A_3(3)) & & & & & & & \cdot \\ & \cdot & & & \cdot & & & & & \cdot \\ & \cdot & & & & \cdot & & & & \cdot \\ & & & & & \Psi(A_{k-2}(t-2)) & \Psi(A_{k-1}(t-2)) & \Psi(A_k(t-2)) \\ & & & & & \Psi(A_{k-2}(t-1)) & \Psi(A_{k-1}(t-1)) & \Psi(A_k(t-1)) \\ \Psi(A_1(t)) & \cdot & \cdot & \cdot \cdot & \Psi(A_{k-2}(t)) & \Psi(A_{k-1}(t)) & \Psi(A_k(t)) \end{bmatrix} \begin{bmatrix} A_{1,1,1} \\ A_{i,1,1} \\ A_{1,2,1} \\ A_{i,j,1} \\ A_{1,1,2} \\ A_{i,1,2} \\ A_{i,j,2} \\ A_{i,j,k} \end{bmatrix} = \begin{bmatrix} I_1 \\ \cdot \\ \cdot \\ \cdot \\ \cdot \\ \cdot \\ \cdot \\ I_t \end{bmatrix}$$

Jede Zeile stellt dabei die Summe der Relativkonzentrationen der jeweiligen Analyte in den Proben dar. Diese Vorgehensweise kann auf das Rohchromatogramm in der zirkulären und nicht-zirkulären Darstellung angewandt werden. Die jeweilige Konzentration der Analyte ergibt sich als Konzentrationsvektor, der mit der Konzentrationsverteilungmatrix multipliziert die Signalintensitäten in jedem Zeitintervall des Rohchromatogramms ergibt. Damit erhält man ein lineares Gleichungssystem in Matrixdarstellung, das durch iteratives Eliminieren von Variablen oder durch Anwendung der Gauß-Jordan Methode gelöst werden kann.

Die Lösung ist die Konzentration der jeweiligen Analyte in den Proben i. Zur Optimierung, Überprüfung und Beurteilung der Qualität der so erhalten Lösung des Gleichungssystem wird das Rohchromatogramm mittels iterativer Anpassung mit dem Konzentrationsvektor (durch Bildung der Differenz oder durch Division) und anschließender Hadamard-Transformation in ein Gesamtchromatogramm überführt, dessen Abweichungen in der Basislinie durch weitere Feinabstimmungsschritte bei der Lösung des linearen Gleichungssystems minimiert werden.

Fig. 9 zeigt auf der rechten Seite die Konzentration der Analyte der jeweiligen Proben in einer zirkulären Darstellung. Durch zirkuläre Verschiebung gemäß der binären Pseudozufallssequenz und dem jeweiligen Zeitintervall werden die Konzentrationen der Analyte in den einzelnen Proben erhalten. Diese Konzentrationsdaten können mit weitere in Absolutkonzentrationen oder Relativkonzentration, vorzugsweise durch Einsatz einer internen Standardisierung, weiter verarbeitet werden.

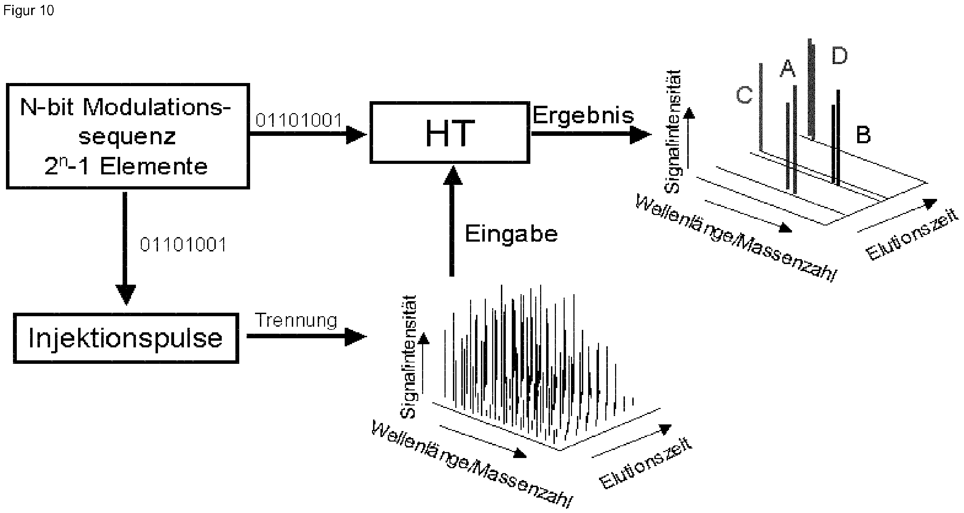

Anhand des in dem Diagramm gemäß Fig. 10 exemplarisch dargestellten Ablaufs der Analyse eines Stoffgemischs ist die Nutzung einer zweidimensionalen Erfassung und Auswertung erkennbar. Bei dem dabei zum Einsatz kommenden Dekonvolutionsverfahren werden die Spektren des Stoffgemischs identifiziert. Das Dekonvolutionsverfahren weist die folgenden Schritte auf:

1. Extraktion der jeweiligen Wellenzahl oder Masse/Ladungs-Verhältnisses aus allen von der Auswerteeinrichtung detektierten Spektren und
2. Hadamard-Transformation mit der bekannten Pseudozufallssequenz.

Daraus ergeben sich zu den jeweiligen Peaks im konventionellen Chromatogramm die Spektren, mit verbessertem Signal-zu-Rausch-Verhältnis (SNR) und verkürzten Analysedauern.

Die in den Figuren der Zeichnung dargestellten Ausführungsbeispiele der Erfindung dienen lediglich der Erläuterung der Erfindung und sind für diese nicht beschränkend.

**Patentansprüche**

**1.** Verfahren zur Erzeugung von gepulsten Stoffgemischen, insbesondere komplexen chemischen und/oder biochemischen Stoffgemischen, **dadurch gekennzeichnet, dass** ein kontinuierlicher Stoffgemischstrom nacheinander durch wenigstens zwei voneinander getrennte Kammern geführt wird, wobei in der ersten Kammer eine Fokussierung des Stoffgemischstroms und in der zweiten Kammer eine Modulation des fokussierten Stoffgemischstroms mit Pulsen einer eindeutigen binären Sequenz erfolgt und dass die eindeutig binäre Sequenz aus einer mit einer wiederholenden Sequenz unterteilten mit einem binären Zufallsgenerator erzeugten Sequenz gebildet wird.

**2.** Verfahren nach Anspruch 1, **dadurch gekennzeichnet, dass** die Fokussierung des Stoffgemischstroms und/oder die Modulation des fokussierten Stoffgemischstroms mittels eines Kalt- und Warmgasstroms erfolgt, wobei der Stoffgemischstrom zunächst ausgefroren und anschließend durch schnelles Aufheizen wieder freigesetzt wird.

3. Verfahren nach Anspruch 2, **dadurch gekennzeichnet, dass** die Kammern jeweils wenigstens eine Kaltgasjetdüse und wenigstens eine Warmgasjetdüse aufweisen, deren Düsenöffnungen eine im Wesentlichen senkrecht zur Strömungsrichtung des Stoffgemischstroms orientierte Kalt-, beziehungsweise Warmgasströmung durch die jeweilige Kammer ermöglichen.

4. Verfahren nach Anspruch 3, **dadurch gekennzeichnet, dass** die Düsenöffnungen·der wenigstens einen Kaltgasjetdüse und der wenigstens einen Warmgasjetdüse der jeweiligen Kammern eine im Wesentlichen senkrecht zueinander stehende Strömung ermöglichen.

5. Verfahren nach Anspruch 2 oder Anspruch 3, **dadurch gekennzeichnet, dass** die Kalt- und/oder Warmgasjetdüsen der jeweiligen Kammern mit Gasströmen von bis zu 40 l/min betrieben werden.

6. Verfahren nach einem der Ansprüche 3 bis 5, **dadurch gekennzeichnet, dass** zumindest die Düsen der eine Modulation des fokussierten Stoffgemischstroms ermöglichenden Kammer mit Schaltzeiten in einem Bereich von etwa 1 ms bis etwa 1s, vorzugsweise in einem Bereich von etwa 1ms bis etwa 10ms, angesteuert werden.

7. Verfahren nach einem der Ansprüche 1 bis 6, **dadurch gekennzeichnet, dass** die Düsen der wenigstens zwei Kammern· getrennt und unabhängig voneinander angesteuert werden.

8. Verfahren nach einem der Ansprüche 1 bis 7, **dadurch gekennzeichnet, dass** die Düsen der wenigstens zwei Kammern synchronisiert angesteuert werden.

9. Verfahren nach einem der Ansprüche 1 bis 8, **dadurch gekennzeichnet, dass** die Düsen der wenigstens zwei Kammern mit unterschiedlichen Sequenzen angesteuert werden.

10. Verfahren nach einem der Ansprüche 2 bis 9, **gekennzeichnet durch** eine Veränderungen der Zusammensetzung des verdampften Stoffgemisches ausschließende Gasströmung eines Gases und/oder eines Gasgemisches für den Kalt- und/oder Warmgasstrom.

11. Verfahren nach einem der Ansprüche 2 bis 10, **dadurch gekennzeichnet, dass** der Druck der jeweiligen Gasströmung gesteuert wird.

12. Verfahren nach einem der Ansprüche 1 bis 11, wobei das zu analysierende Stoffgemisch über den Ausgang der zweiten Kammer einer Trenneinrichtung zugeführt wird.

13. Vorrichtung zur Erzeugung von gepulsten Stoffgemischen, insbesondere komplexen chemischen und/oder biochemischen Stoffgemischen,

wobei die Vorrichtung einen binären Zufallsgenerator zur Erzeugung einer eindeutigen binären Sequenz und wenigstens zwei voneinander getrennte, jeweils einen Eingang und einen Ausgang aufweisende Kammern zur Führung eines kontinuierlichen Stoffgemischstroms durch die jeweilige Kammer aufweist,
wobei die Kammern in Strömungsrichtung des Stoffgemischstroms durch die Kammern nacheinander angeordnet sind und wobei die Kammern jeweils wenigstens eine Kaltgasjetdüse und wenigstens eine Warmgasjetdüse aufweisen, deren Düsenöffnungen eine im Wesentlichen senkrecht zur Strömungsrichtung des Stoffgemischstroms orientierte Kalt-, beziehungsweise Warmgasströmung durch die jeweilige Kammer ermöglichen,
wobei die in Strömungsrichtung des Stoffgemischstroms erste Kammer ausgebildet ist, eine Fokussierung des Stoffgemischstroms zu ermöglichen und die in Strömungsrichtung des Stoffgemischstroms zweite Kammer ausgebildet ist, eine Modulation des fokussierten Stoffgemischstroms mit Pulsen einer eindeutigen binären Sequenz zu ermöglichen.

14. Vorrichtung nach Anspruch 13, **dadurch gekennzeichnet, dass** die Düsenöffnungen der wenigstens einen Kaltgasjetdüse und der wenigstens·einen Warmgasjetdüse der jeweiligen Kammern ausgebildet sind, eine im Wesentlichen senkrecht zueinander stehende Strömung zu ermöglichen.

15. Vorrichtung nach Anspruch 13 oder Anspruch 14, **dadurch gekennzeichnet, dass** die Kalt- und/oder Warmgasjetdüsen der jeweiligen Kammern mit Gasströmen von bis zu 40 l/min betreibbar sind.

16. Vorrichtung nach einem der Ansprüche 13 bis 15, **dadurch gekennzeichnet, dass** zumindest die Düsen der eine Modulation des fokussierten Stoffgemischstroms ermöglichenden Kammer mit Schaltzeiten in einem Bereich von etwa 1 ms bis etwa 1 s, vorzugsweise in einem Bereich von etwa 1 ms bis etwa 10 ms, ansteuerbar sind.

17. Vorrichtung nach einem der Ansprüche 13 bis 16, **dadurch gekennzeichnet, dass** diese zur Nutzung eines Verfahrens nach einem der Ansprüche 1 bis 12 ausgebildet ist.


**Claims**

1. Method for producing pulsed substance mixtures, particularly complex chemical and/or biochemical substance mixtures, **characterised in that** a continuous stream of the substance mixture is fed consecutively through at least two separate chambers, wherein the substance mixture stream is focused in the first chamber and in the second chamber the focused substance mixture stream is modulated with pulses of a unique binary sequence, and that the unique binary sequence is formed from a sequence that is generated by a binary random number generator and divided by a repeating sequence.

2. Method according to claim 1, **characterised in that** the stream of substance mixture is focused and/or the focused substance mixture stream is modulated by means of a cold and warm gas stream, wherein the substance mixture stream is first frozen out and then released again by rapid heating.

3. Method according to claim 2, **characterised in that** each of the chambers has at least one cold gas jet nozzle and at least one warm gas jet nozzle, the nozzle openings of which enable a stream of cold or warm gas to be directed through the respective chamber in a direction substantially perpendicular to the flow direction of the substance mixture stream.

4. Method according to claim 3, **characterised in that** the nozzle openings of the at least one cold gas jet nozzle and the at least one warm gas jet nozzle enable streams to be created that are substantially perpendicular to each other.

5. Method according to claim 2 or claim 3, **characterised in that** the cold and/or warm gas jet nozzles of the respective chambers are operated with gas streams of up to 40 l/min.

6. Method according to any one of claims 3 to 5, **characterised in that** at least the nozzles of the chamber that enables modulation of the focused substance mixture stream are actuated with switching times in a range from about 1 ms to about 1 s, preferably in a range from about 1 ms to about 10 ms.

7. Method according to any one of claims 1 to 6, **characterised in that** the nozzles of the at least two chambers are actuated separately and independently of each other.

8. Method according to any one of claims 1 to 7, **characterised in that** the nozzles of the at least two chambers are actuated synchronously.

9. Method according to any one of claims 1 to 8, **characterised in that** the nozzles of the at least two chambers are actuated with different sequences.

10. Method according to any one of claims 2 to 9, **characterised by** a gas flow of a gas and/or a gas mixture that precludes changes in the composition of the vaporised substance mixture for the cold and/or warm gas stream.

11. Method according to any one of claims 2 to 10, **characterised in that** the pressure of the respective gas stream is controlled.

12. Method according to any one of claims 1 to 11, wherein the substance mixture to be analysed is fed to a separating device via the outlet from the second chamber.

13. Device for producing pulsed substance mixtures, particularly complex chemical and/or biochemical substance mixtures,

  wherein the device includes a binary random number generator for generating a unique binary sequence and at least two chambers that are separate from each other and each have an inlet and an outlet for transporting a continuous stream of substance mixture through the respective chamber,
wherein the chambers are arranged consecutively in the direction of flow of the substance mixture stream through the chambers, and wherein each chamber has at least one cold gas jet nozzle and at least one warm gas jet nozzle, the nozzle openings of which enable a stream of cold or warm gas to be directed through the respective chamber in a direction substantially perpendicular to the flow direction of the substance mixture stream,
wherein the first chamber in the direction of flow of the substance mixture stream is designed to enable focusing of the substance mixture stream, and the second chamber in the direction of flow of the substance mixture stream is designed to enable modulation of the focused substance mixture stream with pulses of a unique binary sequence.

14. Device according to claim 13, **characterised in that** the nozzle openings of the at least one cold gas jet nozzle and the at least one warm gas jet nozzle in the respective chambers are designed to enable streams to be created that are substantially perpendicular to each other.

15. Device according to claim 13 or claim 14, **characterised in that** the cold and/or warm gas jet nozzles of the respective chambers are operable with gas streams of up to 40 l/min.

16. Device according to any one of claims 13 to 15, **characterised in that** at least the nozzles of the chamber that enables modulation of the focused substance mixture stream are actuated with switching times in a range from about 1 ms to about 1 s, preferably in a range from about 1 ms to about 10 ms.

17. Device according to any one of claims 13 to 16, **characterised in that** said device is designed for use in a method according to any one of claims 1 to 12.

## Revendications

1. Procédé de fabrication de mélanges pulsés de substances, en particulier de mélanges complexes de substances chimiques et/ou biochimiques, **caractérisé en ce qu'**un flux continu de mélange de substances est conduit successivement dans au moins deux chambres séparées l'une de l'autre, dans lequel, dans la première chambre, a lieu une focalisation du flux de mélange de substances et, dans la seconde chambre, une modulation du flux focalisé de mélange de substances avec des impulsions d'une séquence binaire sans équivoque et que la substance binaire sans équivoque est constituée d'une séquence divisée comportant une séquence de répétition accompagnée d'une séquence générée au moyen d'un générateur binaire aléatoire.

2. Procédé selon la revendication 1, **caractérisé en ce que** la focalisation du flux de mélange de substances et/ou la modulation du flux focalisé de mélange de substances a lieu au moyen d'un flux de gaz froid et chaud, le flux de mélange de substances étant d'abord décongelé et ensuite relâché par un réchauffement rapide.

3. Procédé selon la revendication 2, **caractérisé en ce que** les chambres présentent respectivement au moins une buse de projection de gaz froid et au moins une buse de projection de gaz chaud dont les ouvertures de buses permettent un écoulement de gaz froid ou chaud orienté sensiblement à la perpendiculaire du sens d'écoulement du flux de mélange de substances à travers la chambre respective.

4. Procédé selon la revendication 3, **caractérisé en ce que** les ouvertures de buses de l'au moins une buse de projection de gaz froid et de l'au moins une buse de projection de gaz chaud des chambres respectives permettent un écoulement sensiblement mutuellement perpendiculaire.

5. Procédé selon la revendication 2 ou la revendication 3, **caractérisé en ce que** les buses de projection de gaz froid et/ou de gaz chaud des chambres respectives fonctionnent avec des flux gazeux allant jusqu'à 40 l/min.

6. Procédé selon une des revendications 3 à 5, **caractérisé en ce qu'**au moins les buses de la chambre permettant une modulation du flux focalisé de mélange de substances sont commandées avec des temps de commutation de l'ordre d'environ 1 ms à environ 1 s, de préférence de l'ordre d'environ 1 ms à environ 10 ms.

7. Procédé selon une des revendications 1 à 6, **caractérisé en ce que** les buses des au moins deux chambres sont commandées séparément et indépendamment les unes des autres.

8. Procédé selon une des revendications 1 à 7, **caractérisé en ce que** les buses des au moins deux chambres sont commandées de manière synchronisée.

9. Procédé selon une des revendications 1 à 8, **caractérisé en ce que** les buses des au moins deux chambres sont commandées avec des séquences différentes.

10. Procédé selon une des revendications 2 à 9, **caractérisé par** un écoulement gazeux d'un gaz et/ou d'un mélange gazeux pour le flux de gaz froid et/ou chaud excluant des modifications de la composition du mélange vaporisé de substances.

11. Procédé selon une des revendications 2 à 10, **caractérisé en ce que** la pression de l'écoulement gazeux respectif est contrôlée.

12. Procédé selon une des revendications 1 à 11, dans lequel le mélange de substances à analyser est acheminé par la sortie de la seconde chambre vers un dispositif séparateur.

13. Dispositif de fabrication de mélanges pulsés de substances, en particulier de mélanges complexes de substances chimiques et/ou biochimiques,

   ce dispositif présentant un générateur aléatoire binaire pour générer une séquence binaire sans équivoque et au moins deux chambres séparées l'une de l'autre et présentant respectivement une entrée et une sortie pour conduire un flux continu de mélange de substances à travers la chambre respective,
   les chambres étant disposées successivement dans le sens d'écoulement du flux de mélange de substances à travers les chambres et les chambres présentant respectivement au moins une buse de projection de gaz froid et au moins une buse de projection de gaz chaud dont les ouvertures de buses permettent un écoulement de gaz froid ou chaud orienté sensiblement à la perpendiculaire du sens d'écoulement du flux de mélange de substances dans la chambre respective,
   la première chambre dans le sens d'écoulement du flux de mélange de substances étant conçue pour permettre une focalisation du flux de mélange de substances et la seconde chambre dans le sens d'écoulement du flux de mélange de substances étant conçue pour permettre une modulation du flux focalisé de mélange de substances avec des impulsions d'une séquence binaire sans équivoque.

14. Dispositif selon la revendication 13, **caractérisé en ce que** les ouvertures de buse de l'au moins une buse de projection de gaz froid et de l'au moins une buse de projection de gaz chaud des chambres respectives sont conçues pour permettre un écoulement sensiblement mutuellement perpendiculaire.

15. Dispositif selon la revendication 13 ou la revendication 14, **caractérisé en ce que** les buses de projection de gaz froid et/ou chaud des chambres respectives peuvent fonctionner avec des flux gazeux allant jusqu'à 40 l/min.

16. Dispositif selon une des revendications 13 à 15, **caractérisé en ce qu'**au moins les buses de la chambre permettant une modulation du flux focalisé de mélange de substances peuvent être commandées avec des temps de commutation de l'ordre d'environ 1 ms à environ 1 s, de préférence de l'ordre d'environ 1 ms à environ 10 ms.

17. Dispositif selon une des revendications 13 à 16, **caractérisé en ce qu'**il est conçu pour l'utilisation d'un procédé selon une des revendications 1 à 12.

Figur 1

Figur 2    Kontinuierl. Probeninjektion

Figur 3

Figur 4

Figur 5

Figur 6

Figur 7

Figur 8

Figur 9

Figur 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3001425 A1
- US 20040144918 A1